# EUROPÄISCHE PATENTSCHRIFT

(11) **EP 0 370 299 B1**
(45) Veröffentlichungstag und Bekanntmachung des Hinweises auf die Patenterteilung: **28.04.1993**
(21) Anmeldenummer: 89120573.4
(22) Anmeldetag: 07.11.1989
(51) Int. Cl.: C09D 133/14, C08F 8/14, C08F 8/32, B05D 7/08

(54) **Wässriges Beschichtungsmittel, ein Verfahren zu seiner Herstellung und seine Verwendung**
Aqueous coating material, process for its preparation and its use
Composition de revêtement aqueuse, procédé pour sa préparation et son utilisation

(30) Priorität: 19.11.1988 DE 3839171
(43) Veröffentlichungstag der Anmeldung: 30.05.1990
(73) Patentinhaber: BAYER AG, 51368 Leverkusen (DE)
(72) Erfinder: Dhein, Rolf, Dr., D-4150 Krefeld (DE); Scholl, Thomas, Dr., D-4005 Meerbusch 2 (DE); Wellner, Wolfgang, Dr., D-5060 Bergisch-Gladbach 2 (DE); Bäcker, Lothar, Dipl.-Ing., D-4047 Dormagen 5 (DE)

(56) Entgegenhaltungen:
- FR-A- 2 265 832
- GB-A- 767 476

## Beschreibung

Die vorliegende Erfindung betrifft wäßrige, lufttrocknende Beschichtungsmittel auf Basis von chemisch eingebaute trocknende Fettsäurereste und chemisch eingebaute quartäre Ammoniumgruppen aufweisenden Polyacrylaten, ein Verfahren zu ihrer Herstellung und ihre Verwendung zur Beschichtung von Holz.

Wasserlösliche Bindemittel finden aufgrund dessen, daß bei ihrer Applikation überwiegend das ökologisch völlig unbedenkliche Wasser als Lösungsmittel in die Umwelt emittiert wird, ein zunehmendes Interesse. Es hat deshalb nicht an Versuchen gefehlt, hochwertige Bindemittel mit Wasser als Lösungsmittel zu entwickeln. So sind beispielsweise auf dem Gebiet der Maler- und do-it-yourself-Lacke und dabei insbesondere bei den Holzbeschichtungen zunehmend wasserverdünnbare bzw. wasserlösliche Systeme erhältlich Auch im industriellen Anwendungsbereich zeigt sich ein großes Interesse an wäßrigen Bindemitteln. Dazu haben die verschärften gesetzlichen Bestimmungen bei der Emission organischer Lösungsmittel im besonderen Maße beigetragen.

Meistens handelt es sich bei den wasserlöslichen Bindemitteln um Alkydharze, die seitenständige, freie Carboxylgruppen aufweisen und nach Neutralisation der Carboxylgruppen mit Aminen wasserlöslich werden (vgl. z.B. AT-PS 180 407, DE-OS 1 917 162, DE-OS 2 323 546 oder DE-AS 2 239 094). Die Neutralisation mit Aminen führt zu einem schwach alkalischen pH-Wert der wäßrigen Bindemittel, was im Zusammenwirken mit den Estergruppen im Polyestermolekül eine geringe Verseifungsstabilität bewirkt Dies zeigt sich auch in der begrenzten Lagerstabilität der wäßrigen Lacklösungen, die nach allmählichem Absinken des pH-Wertes ausfallen.

Desweiteren weisen diese Bindemittel häufig erhebliche Anteile an wassermischbaren organischen Kolösern auf, die während der Trocknung zusammen mit den anderen flüchtigen Bestandteilen - Wasser und Amin - entweichen. Der ökologische Vorteil, den diese Bindemittel aufgrund ihrer Wasserlöslichkleit aufweisen, wird hierdurch gemindert. Eine Verminderung des Kolöseranteils verschlechtert in der Regel das Verdünnungsverhalten der Bindemittel. Daraus hergestellte Lacke weisen nur geringe Bindemittelgehalte auf.

Auch wäßrige Bindemittel auf Polyacrylatbasis sind bereits bekannt (vgl. z.B. EP-A-0 218 906, DE-OS 2 347 999, DE-OS 2 357 152, DE-OS 2 507 842 und DE-OS 2 531 802). Bei den Beschichtungsmitteln dieser Vorveröffentlichungen handelt es sich um solche auf Basis von anionisch modifizierte, d.h. Carboxylatgruppen aufweisenden Polymerisaten, die in Kombination mit einem Härter insbesondere thermisch aushärtbar sind.

Alle derartigen Beschichtungsmittel sind insbesondere für die Holzbeschichtung weitgehend ungeeignet, da Holzlacke möglichst ohne Hitzebehandlung aushärtbar sein sollten, und insbesondere da bei der Holzbeschichtung die im Lack enthaltenen, die Gegenionen zu den eingebauten Carboxylatgruppen bildenden Amine durch die im Holz natürlicherweise enthaltenen pflanzlichen Gerbstoffe, die in Ullmanns Encyclopädie der technischen Chemie, 3. Auflage, 1960, Band 11, Seite 593 ff. als kompliziert aufgebaute Verbindungen mit zahlreichen phenolischen Hydroxyl- und Carboxylgruppen beschrieben werden, neutralisiert werden. Infolgedessen kommt es beim Eindringen in Holz schnell zu einer Koagulation des Bindemittels.

Es war die der vorliegenden Erfindung zugrundeliegende Aufgabe, neuartige, wäßrige, lufttrocknende Beschichtungsmittel zur Verfügung zu stellen, die insbesondere zur Behandlung von Holz und Holzwerkstoffen geeignet sind. Die Beschichtungsmittel sollten darüber hinaus nur geringe Mengen an organischen Lösungsmitteln aufweisen, keine Amine imitieren und nach den üblichen Verfahren der Beschichtungstechnologie auf Holz auftragbar sein und eine ausreichende Eindringtiefe und Anschlußzeit gewährleisten.

Diese Aufgabe konnte mit der Bereitstellung der nachstehend näher beschriebenen erfindungsgemäßen Beschichtungsmittel gelöst werden.

Die erfindungsgemäßen Beschichtungsmittel basieren auf Polyacrylatharzen, die lufttrocknende, ungesättigte Fettsäurereste und quartäre Ammoniumgruppen eingebaut enthalten. Aufgrund des Vorliegens dieser quartären Ammoniumgruppen unterscheiden sich die erfindungsgemäßen Beschichtungsmittel von den Beschichtungsmitteln gemäß der eigenen älteren deutschen Patentanmeldung P 37 38 932.7, die auf Polyacrylatsalzen mit eingebauten tertiären Ammoniumgruppen basieren.

Gegenstand der Erfindung sind also wäßrige Beschichtungsmittel auf der Grundlage von Polyacrylatharzen, dadurch gekennzeichnet, daß die Polyacrylatharzen lufttrocknende, ungesättigte Fettsäurereste und quartäre Ammoniumgruppen eingebaut enthalten.

Gegenstand der Erfindung sind insbesondere die bevorzugten derartigen Beschichtungsmittel, enthaltend ein wasserlösliches, lufttrocknendes Bindemittel sowie gegebenenfalls die in der Lacktechnologie üblichen Hilfs-und Zusatzmittel, dadurch gekennzeichnet, daß das Bindemittel ein Polyacrylat eines über 1000 liegenden Molekulargewichts mit einem Gehalt an chemisch eingebauten trocknenden Fettsäuren (berechnet als R-COO-, R = Kohlenwasserstoffrest der trocknenden Fettsäure), von 5 bis 40 Gew.-% und einem Gehalt an chemisch eingebauten quartären Ammoniumgruppen von 50 bis 200 Milliäquivalenten pro 100 g Feststoff darstellt.

Gegenstand der Erfindung ist auch ein Verfahren zur Herstellung derartiger Beschichtungsmittel, welches dadurch gekennzeichnet ist, daß man
A) Epoxidgruppen aufweisende Polyacrylate mit einem Epoxidgruppenäquivalentgewicht von 200 bis 1300 mit
B) gegebenenfalls im Gemisch mit nichttrocknenden Fettsäuren vorliegenden, trocknenden Fettsäuren im Sinne einer unter Esterbildung ablaufenden Additionsreaktion umsetzt,
C) die in dem Umsetzungsprodukt gemäß B) noch vorliegenden Epoxidgruppen ganz oder teilweise mit eine N-H-Bindung aufweisenden Ammoniumsalzen auf Basis von tertiären Monoaminen im Sinne einer Additionsreaktion umsetzt,
D) das gemäß C) erhaltene quartäre Ammoniumgruppen enthaltende Umsetzungsprodukt in Wasser auflöst, wobei
E) der gemäß D) erhaltenen Lösung zu einem beliebigen Zeitpunkt während iher Herstellung oder im Anschluß an ihre Herstellung gegebenenfalls aus der Lacktechnologie bekannte Hilfs- und Zusatzmittel einverleibt verden, und wobei die Art und Mengenverhältnisse der Ausgangskomponenten so gewählt werden, daß das im Wasser gelöste Bindemittel das obengenannte Molekulargewicht und den obengenannten Gehalt an trocknenden Fettsäuren und an Ammoniumgruppen aufweist.

Gegenstand der Erfindung ist auch die Verwendung der erfindungsgemäßen Beschichtungsmittel zur Beschichtung von Holz oder Holzwerkstoffen.

Ein besonderer Vorteil dieser neuen Bindemittel ist, daß sie besonders auf hellen Hölzern nur geringe Verfärbungen zeigen. Dies war nicht zu erwarten, da in der Literatur, z.B. Ullmanns Encyclopädie der technischen Chemie, Bd. 11, S. 771 ff ., Urban-Schwarzenberg-Verlag, darauf hingewiesen wird, daß besonders das im Holz enthaltene Lignin mit substituierten Aminen zu Farbreaktionen neigt. Dies mach man sich auch zum Nachweis von Lignin zunutze.

Die als Ausgangsmaterialien A) dienenden, Epoxidgruppen aufweisenden Polyacrylate weisen ein Epoxidäquivalentgewicht von 200 bis 1300, vorzugsweise 300 bis 700 und ein über 700 vorzugsweise von 1000 bis 5000 liegendes Molekulargewicht Mw auf.

Ihre Herstellung gelingt durch an sich bekannte radikalische Polymerisation von Derivaten der Methacryl-und/oder Acrylsäure. Solche sind z.B. Methylmethacrylat, Methacrylat, n- und iso-Butyl-, n-Hexyl-, Cyclohexyl-, 2-Ethylhexyl-, 2-Hydroxyethyl-, Hydroxypropyl-, 2-Ethoxyethyl-, 2-Butoxyethylmethacrylat, 2-Hydroxyethyl-, Hydroxypropyl-, 2-Methoxyethyl-, 2-Butoxyethylacrylat.

Desweiteren können als Monomere auch vinylisch ungesättigte Kohlenwasserstoffe wie Styrol und Vinyltoluol verwendet werden. Die beschriebenen Epoxidäquivalente werden durch Verwendung von epoxidierten Monomeren wie z.B. Glycidylacrylat oder Glycidylmethacrylat erreicht.

Die Durchführung der radikalischen Copolymerisation ist dem Fachmann bekannt und wird in der üblichen Fachliteratur wie z.B. Houben-Weyl, Bd. 14/1, S. 24 ff ., 4. Aufl., Georg Thieme Verlag, Stuttgart, ausführlich beschrieben. Auf eine ausführliche Erläuterung soll deshalb an dieser Stelle verzichtet werden.

Bei den trocknenden Fettsäuren B) handelt es sich um die bekannten natürlichen oder synthetischen, trocknenden Fettsäuren, die zwei oder mehr Doppelbindungen und bis 22, vorzugsweise 14 bis 18 Kohlenstoffatome aufweisen. Beispiele für solche Fettsäuren sind Linolsäure, Linolensäure, Eläostearinsäure, Parinarsäure, Archidonsäure, Clupanodonsäure, Misinsäure, Ricinenfettsäure und konjugierte mehrfach ungesättigte Fettsäuren wie z.B. ®Prifac 7967, ®Prifac 7968 und ®Prifac 7969. Bei den letztgenannten drei Säuren handelt es sich um synthetische, konjugiert ungesättigte Fettsäuren mit 18 Kohlenstoffatomen. Diese Säuren stellen Handelsprodukte der Firma Unichema Chemie GmbH dar.

Die beispielhaft genannten, mehrfach ungesättigten Fettsäuren können bei der Durchführung des erfindungsgemäßen Verfahrens selbstverständlich auch im Gemisch mit einfach ungesättigten und/oder gesättigten Fettsäuren eingesetzt werden.

In der ersten Stufe des erfindungsgemäßen Verfahrens werden die Epoxidgruppen aufweisenden Polymerisate A) mit den Fettsäuren oder Fettsäuregemischen B) unter Inertgasatmosphäre bei 80 bis 120°C, vorzugsweise 100 bis 120°C umgesetzt. Dabei wird die Fettsäure unter Öffnung des Epoxidringes und unter Esterbildung an das Copolymermolekül angebunden. Die Menge der trocknenden Fettsäuren wird im übrigen so bemessen, daß in den letztendlich erhaltenen erfindungsgemäßen Bindemitteln 5 bis 40, vorzugsweise 10 bis 30 Gew.-% an eingebauten trocknenden Fettsäureresten (berechnet als R-COO-, R = Kohlenwasserstoffrest der trocknenden Fettsäuren) vorliegen.

Die in den so erhaltenen Umsetzungsprodukten noch verbleibenden Epoxidgruppen werden anschließend in einem zweiten Reaktionsschritt zumindest teilweise, vorzugsweise vollständig mit einem Salz eines tertiären Amins der allgemeinen Formel 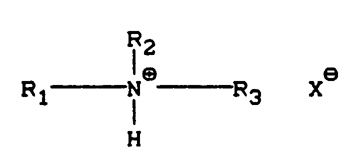
umgesetzt, wobei
- R₁, R₂ und R₃: für gleiche oder verschiedene Reste stehen und gegebenenfalls einen Hydroxylsubstituenten oder Etherbrücken aufweisende, Alkylreste bis zu 8, vorzugsweise mit 1 bis 4 Kohlenstoffatomen bedeuten,
und
- X^{⊖}: für das Anion einer organischen oder anorganischen Säure steht.

Für die Aminsalzherstellung geeignete Amine sind beispielsweise Trimethylamin, Triethylamin, N,N-Dimethylethanolamin, N,N-Diethylethanolamin, N-Methyldiethanolamin, N-Butyldiethanolamin, 3-Dimethylamino-1-propanol, 1-Dimethylamino-2-propanol und Triethanolamin.

Besonders geeignet und deshalb bevorzugt sind die Salze des N,N-Dimethylethanolamins, weil die daraus hergestellten quartäre Ammoniumgruppen aufweisenden Bindemittel eine gute Löslichkeit in Wasser aufweisen.

Die Art der in den Salzen chemisch gebunden vorliegenden Säure HX ist für die Durchführbarkeit des erfindungsgemäßen Verfahrens weitgehend irrelevant. Besonders gut geeignet sind beispielsweise die Salze der genannten Formel auf Basis von Essigsäure.

Vorzugsweise wird bei der letztgenannten Umsetzung so vorgegangen, daß man das aus der ersten Reaktionsstufe resultierende Zwischenprodukt mit der äquivalenten Menge eines derartigen Salzes bei 60 bis 100°C zur Reaktion bringt. Unter Öffnung der Epoxidringe entstehen hierbei durch Addition der tertiären Ammoniumionen Polymere mit eingebauten quartären Ammoniumgruppen.

Der Überschuß der in der ersten Stufe des erfindungsgemäßen Verfahrens eingesetzten, Epoxidgruppen aufweisenden Polymerisate A) gegenüber den Fettsäuren bzw. Fettsäuregemischen B), d.h. die Menge der überschüssigen Epoxidgruppen in dem hierbei anfallenden Umsetzungsprodukt, sowie die Menge des in der zweiten Reaktionsstufe eingebauten Aminsalzes und der daraus resultierenden quartären Ammoniumgruppen werden im übrigen so gewählt, daß in den letztendlich erhaltenen Bindemitteln 50 bis 200, vorzugsweise 50 bis 120 Milliäquivalente pro 100 g Feststoff an chemisch eingvebauten quartären Ammoniumgruppen vorliegen. Die Menge der Ammoniumgruppen muß auf jeden Fall ausreichend sein, um die Wasserlöslichkeit der erfindungsgemäßen Bindemittel zu gewährleisten.

Im Anschluß daran erfolgt dann die Zugabe des Wassers zwecks Herstellung von wäßrigen Lösungen der erfindungsgemäßen Bindemittel.

In den erfindungsgemäßen Beschichtungsmitteln können die aus der Lacktechnologie bekannten Hilfs- und Zusatzmittel wie beispielsweise Pigmente, Füllstoffe, Verlaufhilfsmittel, Sikkative oder Hilfslösungsmittel vorliegen. Es ist jedoch hervorzuheben, daß es einer der Vorteile der erfindungsgemäßen Beschichtungsmittel ist, daß ihr Gehalt an Hilfslösungsmitteln sehr niedrig, im allgemeinen unter 15 Gew.-%, bezogen auf gebrauchsfertigen Lack, gehalten werden kann. Geeignete Hilfslösungsmittel sind beispielsweise Butylglykol, Methoxypropanol, Ethylenglykolmonomethylether, Ethylenglykolmonoethylether, Butoxypropanol oder Gemische derartiger Lösungsmittel.

Die Hilfs- und Zusatzmittel können sowohl den Ausgangsmaterialien zur Herstellung der erfindungsgemäßen Bindemittel oder den letztendlich erhaltenen wäßrigen Lösungen einverleibt werden. Die gegebenenfalls vorliegenden Hilfslösungsmittel kommen oftmals bereits bei der Herstellung der Copolymerisate A) zum Einsatz, während die Sikkative den Beschichtungsmitteln im allgemeinen erst nach ihrer Herstellung einverleibt werden.

Die erfindungsgemäßen Beschichtungsmittel stellen vielseitig verwendbare, nach allen bekannten Methoden der Beschichtungstechnologie verarbeitbare Anstrichmittel dar und eignen sich insbesondere zur Herstellung von Holz oder Holzwerkstoffen. Die als wäßrige Lösung vorliegenden, lufttrocknenden Holzlacke lassen sich im Gegensatz zu Dispersionen wie bisher bekannte Lacklösungen verarbeiten, verbinden sich unter dem Einfluß von Luftsauerstoff intensiv mit den Holzuntergründen, trocknen sehr rasch und liefern Filme mit hochwertigen mechanischen Eigenschaften. Sie geben allenfalls nur geringe Menge an Hilfslösungsmitteln an die Umgebung ab und enthalten keine bei der Filmbildung flüchtigen Amine und Neutralisationsmittel.

Die in den nachfolgenden Beispielen angegebenen Teile und Prozentsätze beziehen sich jeweils auf das Gewicht.

### Herstellung der Klarlacke

Die nach den beschriebenen Beispielen erhaltenen wäßrigen Bindemittellösungen wurden durch Zugabe von deionisiertem Wasser auf eine streichbare Konsistenz eingestellt. Zur Verhinderung von Hautbildung wurden die Lösungen mit 1 % ®Ascinin R conz - ein Hautverhinderungsmittel auf Oximbasis der Fa. Bayer AG - versetzt. Die Sikkativierung erfolgte mit Co-octoat aqua - eine 7 % gebundenes Kobalt enthaltene Lösung der Fa. Gebr. Borchers AG. Das Bindemittel nach Beispiel 1 wurde mit 0,04 % und das aus Beispiel 2 erhaltene Bindemittel mit 0,02 % Kobalt auf festes Bindemittel sikkativiert. Zur lacktechnischen Prüfung wurden die Lösungen mit 180 µm Naßfilmdicke auf Holz und Glasplatten aufgezogen und hinsichtlich Trocknung, optisches Aussehen und Schwitzwasserbeständigkeit untersucht. Die Kontrolle der Wasserbeständigkeit erfolgte durch Auflegen von wassergetränkten Wattebauschen an 7 Tage alten Filmen und Abdeckung der Auflagestelle mit einer Petrischale bis zur sichtbaren Veränderung der Oberfläche.

### Vergleich 1

Herstellung eines Epoxidgruppen aufweisenden Copolymeren:
Ein Gemisch von 1018,9 Teilen Styrol, 526,2 Teilen Methacrylsäuremethylester, 41,9 Teilen Butylacrylat, 743,7 Teilen Glycidylmethacrylat, 70,8 Teilen t-Butylperoctoat und 23,8 Teilen Dodecanthiol wird innerhalb von 2,5 Stunden bei 110°C in 1050 Teile Butylglykol getropft. Nach 3-stündigem Nachreagieren bei 110°C wird durch 3 Zugaben von je 4,17 Teilen t-Butylperoctoat bis zum vollständigen Umsatz der Monomeren gefahren. Nach der letzten Zugabe wurde noch 2 Stunden bei 110°C gerührt. Die Prüfung auf vollständigen Umsatz erfolgte durch Bestimmung der Auslaufviskosität nach DIN 53 211 40 %ig in Dimethylformamid und durch Festkörperbestimmung. Dazu wird eine dünnschichtige Probe eine Stunde auf 120°C erhitzt und dann die nichtflüchtigen Bestandteile ausgewogen. Nach der dritten Peroctoatzugabe erwiesen sich Festkörper und Viskosität als weitgehend konstant. Der Festkörper ergab sich zu 73,7 % und die Viskosität betrug 30 sec (DIN 53211). Das theoretische Epoxidäquivalentgewicht beträgt 465,6.

2483,5 Teile der 73,7 %igen Copolymerlösung in Butylglykol wurden mit 271,8 Teilen Prifac 7968 bei 120°C bis zu einer Säurezahl 1 umgesetzt. Nach 2 Stunden wurde eine SZ von 0,8 gemessen. Der Festkörpergehalt betrug 74,2 %. Die Viskosität auf 40 % mit Dimethylformamid verdünnt betrug nach DIN 53 211 29 sec. Der restliche Epoxidgehalt betrug 1,56 % und weicht somit nur geringfügig vom theoretischen Wert, der zu 1,60 % errechnet wurde, ab Die Umsetzung wurde unter N₂-Atmosphäre ausgeführt.

158,7 Teile Diethylamin wurden in einer mit Rückflußkühler, beheizbarem Tropftrichter und Kontaktthermometer ausgestatteten Rührapparat vorgelegt. Das Amin wurde auf 50°C aufgeheizt. In das vorgelegte Amin wurden über den beheizten Tropftrichter 1800 Tle. der genannten 74,2 %igen Lösung innerhalb von 30 min zulaufen gelassen. Die Temperatur stieg dabei auf 100°C an. Nach der Zugabe wurde noch 4 h bei 100°C gerührt. Unter vermindertem Druck wurden 31,4 Tle. Diethylamin, die im Überschuß vorgelegt waren, abdestilliert Das erhaltene Polymere wies einen Gehalt an Aminogruppen von 115,5 Milliäquivalenten pro 100 g Feststoff auf. Der Festkörper ergab sich zu 77,6 %. Die Viskosität wurde nach DIN 53 211 in Dimethylformamid mit 39 sec gemessen.

Nach Neutralisation von 86,1 % der vorliegenden Aminogruppen mit Ameisensäure wurde durch portionsweise Zugabe von Wasser auf einen Feststoffgehalt von 24,4 % verdünnt. Dabei wurde eine klare Lösung erhalten.

### Vergleich 2

Herstellung eines Epoxidgruppen aufweisenden Copolymeren:
Nach dem in Beispiel 1 beschriebenen Verfahren wurden in der ersten Stufe 435,5 Teile Styrol, 510,9 Teile Methacrylsäuremethylester, 1359,2 Teile Glycidylmethacrylat, 64,8 Teile t-Butylperoctoat und 55,6 Teile Dodecanthiol in 1049,9 Teilen Methoxypropanol copolymerisiert. Wie in Beispiel 1 wurden nach gleichem zeitlichen Ablauf Peroctoatzugaben von jeweils 4,02 Teilen gemacht. Nach insgesamt 6 Zugaben war die Viskosität und der Festkörper weitgehend konstant.

Der Festkörper der erhaltenen Lösung wurde mit 73,3 % und die Viskosität 40 %ig in Methoxypropanol nach DIN 53 211 mit 77 sec. ermittelt. Das Epoxidäquivalentgewicht errechnete sich zu 256.

2707,5 Teile der erhaltenen Polymerlösung wurden verfahrensmäßig wie in Beispiel 1 beschrieben unter Inertgasatmosphäre mit 943 Teilen Sojaölfettsäure bis zu einer Säurezahl von 0,3 umgesetzt. Die Reaktionszeit betrug 4,5 Stunden. Das Reaktionsprodukt wies einen Festkörpergehalt von 78,8 % und eine Viskosität von 53 sec., 40 %ig in Methoxypropanol gemessen, auf. Der Epoxidgehalt der Lösung ergab sich zu 1,05 %. Das entspricht einem Epoxidäquivalentgewicht von 1200,8.

Anschließend wurden 238,0 Teile Diethylamin mit 2500 Teilen der in der genannten 78,8 %igen Lösung umgesetzt. Nach 3 Stunden bei 100°C wurde ein Festkörpergehalt von 78,5 % gemessen. Die Viskosität ergab sich 40 %ig in Methoxypropanol zu 66 sec. Im Wasserstrahlvakuum wurde der eingesetzte Aminüberschuß destillativ entfernt.

Das erhaltene Polymere wies einen Gehalt an Aminogruppen von 93,4 Milliäquivalenten pro 100 g Feststoff auf. Nach Neutralisation zu 85 % der Aminogruppen mit Essigsäure wurde durch portionsweise Zugabe von Wasser auf 20,1 % verdünnt. Dabei wurde eine klare Lösung erhalten, die sich durch weitere Zugabe von Wasser bis auf 10 % klar verdünnen läßt.

### Beispiel 1

Herstellung eines Epoxidgruppen aufweisenden Copolymeren:
Nach dem in Vergleichsversuch 1 beschriebenen Verfahren wurden 738,7 Teile Styrol, 330 Teile Methacrylsäuremethylester, 35 Teile Butylacrylat, 931 Teile Glycidylmethacrylat, 45,7 Teile Azobisisobutyronitril und 19,9 Teile Dodecanthiol in 899,8 Teilen Methoxypropanol copolymerisiert. Nach 9-stündigem Nachreagieren bei 100°C war der Festkörper und die Viskosität weitgehend konstant.

Der Festkörper ergab sich zu 70,4 % und die Viskosität nach DIN 53 211 betrug 63 sec 40 %ig in Methoxypropanol gemessen.

### Erfindungsgemäßes Verfahren

2795,1 Teile der 70,4 %igen Copolymerlösung in Methoxypropanol wurden mit 284,6 Teilen Prifac 7968 bei 120°C bis zu einer Säurezahl von 0,7 umgesetzt. Der Festkörpergehalt des Reaktionsgemisches ergab sich mit 73,2 %. Die Viskosität der auf 40 % mit Methoxypropanol verdünnten Lösung ergab sich mit 54 sec nach DIN 53 211. 296,1 Teile N,N-Dimethylethanolamin wurden in einer Apparatur wie bei den Vergleichsversuchen beschrieben, vorgelegt und bei 20 bis 30°C mit 199,6 Teilen Essigsäure zum Acetat umgesetzt. Das entstandene Aminacetat wurde auf 60°C aufgeheizt und im Verlauf von 2 h mit 2000 Teilen der zuvor hergestellten 73,2 %igen Lösung versetzt. Anschließend wurde die Temperatur in 30 Minuten auf 100°C erhöht. Nach 90-minütigem Nachreagieren bei 100°C wurde eine Viskosität von 265 sec 40 %ig in Methoxypropanol nach DIN 53 211 gemessen.

Durch Zugabe von Wasser und 2 % Ascinin R conz bezogen auf Polymeres wurde auf einen Festkorper von 33,4 % verdünnt. Die erhaltene wäßrige Lösung ließ sich bis auf 10 % mit Wasser klar verdünnen. Der pH-Wert der 10 %igen Lösung ergab sich mit 8,57. Auch nach Ansäuern durch Zugabe weiterer Säure konnte keine Koagulation beobachtet werden. Das erhaltene Polymere wies einen Gehalt an quartären Ammoniumgruppen von 175,9 Milliäquivalenten pro 100 g Feststoff auf.

### Beispiel 2

Herstellung eines Epoxidgruppen aufweisenden Copolymeren:
Nach dem im Vergleichsversuch 1 beschriebenen Verfahren wurden 672,1 Teile Styrol, 271,4 Teile Methylmethacrylat, 34,5 Teile Butylacrylat und 1070,5 Teile Glycidylmethacrylat mit 45 Teilen Azo-bis-isobutyronitril und 19,6 Teilen Dodecanthiol in 886,9 Teilen Methoxypropanol copolymerisiert. Nach 10-stündigem Nachreagieren bei 110°C wurde ein Festkörpergehalt von 71,7 % gemessen. Die Viskosität betrug 73 sec 40 %ig in Methoxypropanol nach DIN 53 211 gemessen.

### Erfindungsgemäßes Verfahren

3000 Teile der 71,7 %igen Copolymerlösung in Methoxypropanol wurden mit 561,8 Teilen Prifac 7968 bei 120°C in 2,5 h bis zu einer Säurezahl von 0,1, umgesetzt. Das Umsetzungsprodukt hatte einen Festkörpergehalt von 74,0 % und eine Viskosität von 77 sec 40 %ig in Methoxypropanol nach DIN 53 211 gemessen.

261,6 Teile N,N-Dimethylethanolamin wurden mit 176,3 Teilen Essigsäure neutralisiert und nach dem zuvor beschriebenen Verfahren mit 2000 Teilen der zuvor hergestellten 74,0 %igen Polymerlösung umgesetzt. Das dabei erhaltene Polymere hatte einen Festkörpergehalt von 82,9 % und wies eine Viskosität von 131 sec 40 %ig in Methoxypropanol nach DIN 53 211 gemessen auf. Auf 100 g Feststoff bezogen weist das Polymere 144 Milliäquivalente an quartären Ammoniumgruppen auf.

### Ergebnisse der Lackprüfung

Der nach Vergleich 1 erhältliche Klarlack trocknet in 2 Stunden, während der nach Vergleich 2 in etwa 2,5 Stunden trocknet. Klarlacke gemäß Beispiel 1 und 2 trocknen in 1,5 Stunden.

Auf Holz wurden gut haftende und eindringende Lackierungen erhalten, die optisch eine deutliche Hervorhebung der Holzmaserung zeigen. Dieser Effekt wird vom Fachmann als Anfeuerung bezeichnet und ist wegen seiner dekorativen Wirkung auf Holz durchaus erwünscht.

Auf Kiefer- und Fichtenholzbrettchen aufgetragene Lackierungen der Vergleichsversuche führen nach dem Trocknungsvorgang zu einer gelblichen Verfärbung. Im Gegensatz dazu weisen die Beschichtungen gemäß Beispiel 1 und 2 keine Verfärbungen auf.

## Patentansprüche

1. Wäßriges Beschichtungsmittel auf der Grundlage von Polyacrylatharzen, dadurch gekennzeichnet, daß die Polyacrylatharze lufttrocknende, ungesättigte Fettsäurereste und quartäre Ammoniumgruppen eingebaut enthalten.

2. Wäßriges Beschichtungsmittel, enthaltend ein wasserlösliches, lufttrocknendes Bindemittel sowie gegebenenfalls die in der Lacktechnologie üblichen Hilfs- und Zusatzmittel, dadurch gekennzeichnet, daß das Bindemittel ein Polyacrylat eines über 1000 liegenden Molekulargewichts mit einem Gehalt an chemisch eingebauten trocknenden Fettsäuren (berechnet als R-COO-, R = Kohlenwasserstoffrest der trocknenden Fettsäure), von 5 bis 40 Gew.-% und einen Gehalt an chemisch eingebauten quartären Ammoniumgruppen von 50 bis 200 Milliäquivalenten pro 100 g Feststoff darstellt.

3. Verfahren zur Herstellung von wäßrigen Beschichtungsmitteln gemäß Anspruch 1 und 2, dadurch gekennzeichnet, daß man
A) Epoxidgruppen aufweisende Polyacrylate mit einem Epoxidgruppenäquivalentgewicht von 200 bis 1300 mit
B) gegebenenfalls im Gemisch mit nichttrocknenden Fettsäuren vorliegenden, trocknenden Fettsäuren im Sinne einer unter Esterbildung ablaufenden Additionsreaktion umsetzt,
C) die in dem Umsetzungsprodukt gemäß B) noch vorliegenden Epoxidgruppen ganz oder teilweise mit eine N-H-Bindung aufweisenden Ammoniumsalzen auf Basis von tertiären Monoaminen im Sinne einer Additionsreaktion umsetzt,
D) das gemäß C) erhaltene quartäre Ammoniumgruppen enthaltende Umsetzungsprodukt in Wasser auflöst, wobei
E) der gemäß D) erhaltenen Lösung zu einem beliebigen Zeitpunkt während iher Herstellung oder im Anschluß an ihre Herstellung gegebenenfalls aus der Lacktechnologie bekannte Hilfs- und Zusatzmittel einverleibt werden, und wobei die Art und Mengenverhältnisse der Ausgangskomponenten so gewählt werden, daß das im Wasser gelöste Bindemittel das in Anspruch 2 genannte Molekulargewicht und den in Anspruch 2 genannten Gehalt an trocknenden Fettsäuren und an Ammoniumgruppen aufweist.

4. Verwendung des Beschichtungsmittels gemäß Anspruch 1 und 2 zur Beschichtung von Holz oder von Holzwerkstoffen.

## Claims

1. A water-based coating composition based on polyacrylate resins, characterized in that the polyacrylate resins contain incorporated air-drying unsaturated fatty acid residues and quaternary ammonium groups.

2. A water-based coating composition containing a water-soluble air-drying binder and, optionally, the auxiliaries and additives typically used in lacquer technology, characterized in that the binder is a polyacrylate having a molecular weight above 100 and a content of chemically incorporated drying fatty acids (expressed as R-COO-, R = hydrocarbon radical of the drying fatty acid) of 5 to 40% by weight and a content of chemically incorporated quaternary ammonium groups of 50 to 200 milliequivalents per 100 g solids.

3. A process for the production of the water-based coating compositions claimed in claims 1 and 2, characterized in that
A) epoxide-functional polyacrylates having an epoxide group equivalent weight of 200 to 1,300 are reacted with
B) drying fatty acids optionally present in admixture with non-drying fatty acids in an addition reaction accompanied by ester formation,
C) the epoxide groups still present in the reaction product according to B) are completely or partly reacted with ammonium salts based on tertiary monoamines containing an N-H bond in an addition reaction,
D) the reaction product containing quaternary ammonium groups obtained in C) is dissolved in water,
E) auxiliaries and additives known from lacquer technolgy optionally being incorporated in the solution obtained in D) at any time during its preparation or thereafter and the type and quantities of starting components being selected so that the binder dissolved in water has the molecular weight according to claim 2 and the content of drying fatty acids and ammonium groups according to claim 2.

4. The use of the coating composition claimed in claims 1 and 2 for coating wood or wood-based materials.

## Revendications

1. Produits de revêtement aqueux à base de résines polyacryliques, caractérisés en ce que les résines polyacryliques contiennent des groupes d'ammonium quaternaires et des restes d'acides gras insaturés séchant à l'air incorporés.

2. Produits de revêtement aqueux contenant un liant séchant à l'air, soluble dans l'eau, ainsi qu'éventuellement des adjuvants et additifs usuels de la technologie des vernis, laques et peintures, caractérisés en ce que le liant est un polyacrylate de poids moléculaire supérieur à 1000 avec une teneur de 5 à 40% en poids en acides gras siccatifs chimiquement incorporés (calculés comme R-COO-, R = reste hydrocarboné des acides gras siccatifs) et une teneur de 50 à 200 milliéquivalents en groupes ammonium quaternaires chimiquement incorporés par 100 g de substances solides.

3. Procédé pour la fabrication de produits de revêtement aqueux selon les revendications 1 et 2, caractérisé en ce que:
A) l'on fait réagir des polyacrylates contenant des groupes époxy avec un poids équivalent de groupes époxy de 200 à 1300, avec
B) des acides gras siccatifs, éventuellement en mélange avec des acides gras non siccatifs, dans le sens d'une réaction d'addition se déroulant avec formation d'ester,
C) l'on fait ensuite réagir les groupes époxy encore présents dans le produit réactionnel selon B), entièrement ou en partie avec des sels d'ammonium présentant une liaison N-H, à base de monoamines tertiaires, dans le sens d'une réaction d'addition,
D) l'on dissout dans l'eau les produits réactionnels de c) contenant des groupes ammonium quaternaires,
E) l'on incorpore éventuellement dans la solution obtenue selon D), à un instant quelconque durant sa fabrication ou après sa fabrication, des adjuvants et additifs connus de la technologie des vernis, laques et peintures, le genre et les proportions des substances de départ pouvant être choisis de manière telle que le solvant dissous dans l'eau présente le poids moléculaire cité dans la revendication 2 et la teneur en acides gras siccatifs et en groupes ammonium citée dans la revendication 2.

4. Utilisation du produit de revêtement selon les revendications 1 et 2 pour le revêtement du bois ou des matériaux à base de bois.
